# EUROPÄISCHE PATENTANMELDUNG

(11) **EP 0 965 378 A1**
(43) Veröffentlichungstag der Anmeldung: **22.12.1999**
(21) Anmeldenummer: 99108103.5
(22) Anmeldetag: 24.04.1999
(51) Int. Cl.: B01D 45/12, B01D 45/08, F02M 35/022

(54) **Vorrichtung zur Abscheidung von Flüssigkeiten aus Gasen**

(30) Priorität: 19.06.1998 DE 19827296
(71) Anmelder: Filterwerk Mann & Hummel GmbH, 71638 Ludwigsburg (DE)
(72) Erfinder: Fischer, Christian Dr., 70636 Fellbach (DE)
(74) Vertreter: Voth, Gerhard, Dipl.-Ing.

(57) **Zusammenfassung**

Vorgeschlagen wird eine Vorrichtung zur Abscheidung von Flüssigkeiten, insbesondere Wasser aus Gasen, insbesondere der Entwässerung der Ansaugluft für eine Brennkraftmaschine. Diese wird durch eine entsprechende Gestaltung einer beliebigen Verbindungsstelle im Ansaugtrakt der Brennkraftmaschine vor dem Luftfilter erreicht. Dies hat den Vorteil, daß keine weiteren Bauteile als die ohnehin schon vorhandenen Luftführungsteile erforderlich sind. Der Austrag des Wassers kann zum Beispiel über ein Austragsventil oder über eine kleine Öffnung geschehen.

## Beschreibung

### Stand der Technik

Die Erfindung betrifft eine Vorrichtung zur Abscheidung von Flüssigkeiten, insbesondere Wasser aus Gasen, insbesondere der Entwässerung der Ansaugluft für eine Brennkraftmaschine nach der Gattung des Patentanspruchs 1.

Solche Wasserabscheider zum Einbau in den Ansaugtrakt einer Brennkraftmaschine sind aus dem Stand der Technik bekannt. Das Abscheideprinzip nutzt die Trägheit der abzuscheidenden Wassertröpfchen. Durch eine plötzliche Umleitung der Luft prallen die Wassertröpfchen auf eine Sammelfläche und verlassen das System durch einen dafür vorgesehenen Ausgang. Diese Anordnungen bedeuten jedoch einen Mehraufwand an Bauteilen und steigern daher die Materialkosten sowie die Montageaufwand für den Wasserabscheider.

Die Aufgabe der Erfindung besteht darin, einen kostengünstigen Wasserabscheider mit einem minimalen Aufwand an Bauteilen zu schaffen. Diese Aufgabe wird durch die Merkmale des Patentanspruches 1 gelöst.

### Vorteile der Erfindung

Der erfindungsgemäße Wasserabscheider wird gebildet durch die Verbindungsstelle zweier Rohrteile des Ansaugtraktes. Der Ansaugtrakt einer Brennkraftmaschine besteht in den meisten Fällen sowieso aus mehreren Teilen. Dadurch kann durch entsprechende Gestaltung der Verbindungsstellen zweier Rohrteile der Mehraufwand eines zusätzlichen Wasserabscheiders gespart werden. Die Anwendung der erfindungsgemäßen Lösung ist selbstverständlich nicht auf den Ansaugtrakt einer Brennkraftmaschine beschränkt. Sie ist vielmehr allgemein auf Wasserabscheider in Gasleitungen anwendbar

Eine zweckmäßige Ausbildung der Erfindung sieht den Einbau des Wasserabscheiders vor dem Luftfilter im Ansaugtrakt vor. Dieser sollte mit möglichst trockener Luft beaufschlagt werden.

Eine vorteilhafte Ausbildung des Erfindungsgedankens sieht vor, daß der Wasserabscheider aus einer Prallfläche und einer Umlenkkante besteht. Die Umlenkkante ist Teil des Auslaßrohres, welches Teil des Ansaugtraktes ist, und bildet einen Spalt zusammen mit der Prallfläche, die durch einen Wandabschnitt des Ansaugrohres gebildet wird. Bevor die Ansaugluft den Wasserabscheider durch das Auslaßrohr verlassen kann, muß sie den Spalt passieren und erfährt dabei eine starke Umlenkung. Dabei sammeln sich die in der Ansaugluft enthaltenen Wassertröpfchen aufgrund ihrer Trägheit an der Prallfläche. Das abgeschiedene Wasser kann das System durch einen Auslaß verlassen.

Eine besondere Ausführungsform der Erfindung sieht vor, daß das Auslaßrohr durch den Ansaugstutzen eines Luftfiltergehäuses gebildet wird. Der Wasserabscheider ist bei dieser Version vorteilhafter Weise in die Verbindung zwischen Luftfiltergehäuse und Ansaugkanal integriert.

Gemäß einer weiteren Ausgestaltung der Erfindung ist der Ablauf mit einem Auslaßventil versehen. Dieses verhindert ein Eintreten von Ansaugluft durch das Auslaßventil, welches sich nur bei dem Austrag des angesammelten Wassers öffnet.

Eine besondere Ausführungsform der Erfindung sieht vor, daß das eine Rohrteil in einem Pralltopf endet, wobei der Topfboden die Prallfläche bildet. Das Auslaßrohr wird in die Wandfläche gegenüber dem Topfboden gesteckt. Diese Anordnung ist besonders dann vorteilhaft, wenn die beiden Rohrteile einen Winkel von ungefähr 90° bilden.

Eine Modifikation der Erfindung sieht eine Leitrippe vor, die an der Prallfläche angebracht ist und sich bis zur Umlenkkante des Rohrendes erstreckt. Diese verschließt somit einen Teil des Spaltes zur Umlenkung der Ansaugluft. Eine solche Anordnung ist vorteilhaft, wenn die beiden Rohrteile parallel zueinander zusammengefügt werden sollen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Weitere Einzelheiten der Erfindung werden in den Zeichnungen anhand von schematischen Ausführungsbeispielen beschrieben. Hierbei zeigen:
- Figur 1: einen Wasserabscheider, gebildet aus einem Topf und einem Auslaßrohr im Mittelschnitt (B - B in Figur 2),
- Figur 2: den Schnitt A - A gemäß Figur 1,
- Figur 3: den schematischen Aufbau einer Anordnung mit Ansaugkanal und Filtergehäuse in einem Lastkraftwagen,
- Figur 4: die Bauform eines Wasserabscheiders mit Leitrippe im Mittelschnitt und
- Figur 5: den Schnitt C - C gemäß Figur 4.

### Beschreibung der Ausführungsbeispiele

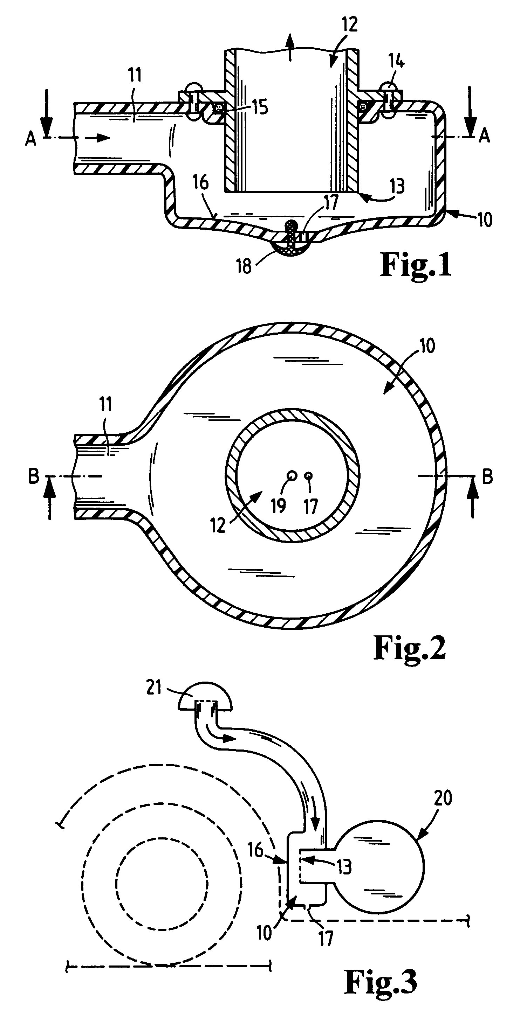

In Figur 1 ist ein Wasserabscheider als Teil eines Ansaugkanals dargestellt. Das eine Rohrteil bildet einen Pralltopf 10, in den der Einlaß 11 der Gasleitung mündet. Ein anderes Rohrteil bildet den Auslaß 12, wobei das Rohrende eine Umlenkkante 13 für die Ansaugluft bildet. Die beiden Rohrteile sind durch eine Nietverbindung 14 miteinander verbunden. Selbstverständlich sind auch andere Mittel zur Verbindung denkbar, so zum Beispiel eine Schnapp- oder eine Schraubverbindung. Als Dichtmittel zwischen den Rohrteilen ist ein O-Ring 15 vorgesehen.

Die Ansaugluft betritt den Wasserabscheider durch den Einlaß 11 und wird anschließend in Richtung des Topfbodens des Pralltopfes 10 umgeleitet. Sie strömt anschließend um die Umlenkkante 13 und verläßt den Wasserabscheider durch den Auslaß 12. Bei der Umlenkung wird das Wasser an einer Prallfläche 16 abgeschieden, die mit dem Topfboden identisch ist. Das abgeschiedene Wasser sammelt sich an einem Ablauf 17 im Topfboden und kann den Wasserabscheider durch ein Auslaßventil 18 verlassen. Das Auslaßventil ist in dieser Bauform einteilig aus Gummi hergestellt.

Figur 2 zeigt den Schnitt A - A aus Figur 1. Zu erkennen ist der Pralltopf 10, der den Auslaß 12 ringförmig umgibt. Erkennbar ist weiterhin der Ablauf 17 sowie die Aufnahmebohrung 19, in die das Auslaßventil 18 eingesteckt wird.

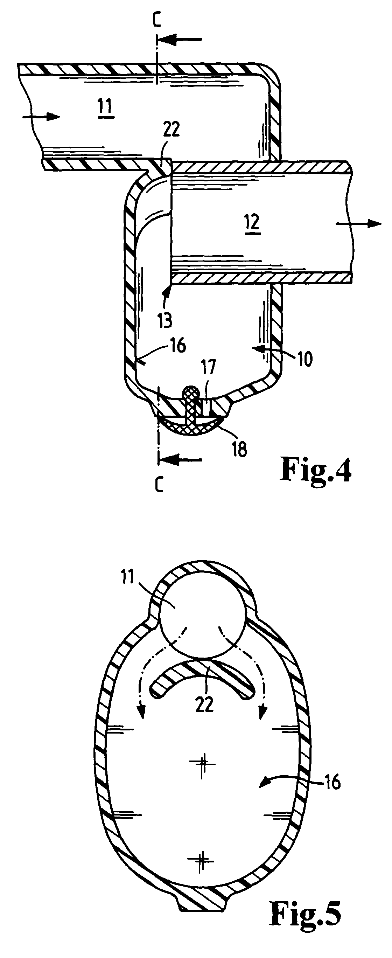

Figur 3 zeigt ein Einbaubeispiel des Wasserabscheiders hinter dem Radkasten eines LKWs. Der Ansaugtrakt vor einem Luftfiltergehäuse 20 endet in dem Pralltopf 10, wobei der Wasserabscheider in der Verbindungsstelle zwischen Pralltopf und einem Ansaugstutzen 21 des Luftfiltergehäuses untergebracht ist. Eine Verbindung der beiden Teile kann gemäß Figur 1 erfolgen. Alternativ hierzu ist genauso eine Montage beider Bauteile am Fahrzeug denkbar. Dabei entfällt die Notwendigkeit einer zusätzlichen Verbindung der beiden Bauteile.

Die Funktion des Wasserabscheiders ist lageunabhängig. Im Beispiel gemäß Figur 3 verläuft die Prallfläche senkrecht zur Wirkungsrichtung der Schwerkraft. Durch die Umlenkung an der Umlenkkante 13 wird das Wasser in gleicher Weise an der Prallfläche 16 abgeschieden und läuft zum tiefsten Punkt des Pralltopfes 10. An dieser Stelle muß der Ablauf 17 vorgesehen werden.

Figur 4 zeigt die Bauform eines Wasserabscheiders, wobei Einlaß 11 und Auslaß 12 parallel verlaufen. In dieser Bauform durchtritt der Einlaß den die Prallfläche 16 bildenden Topfboden des Pralltopfes 10. In dieser Bauform muß vermieden werden, daß die Luft direkt vom Einlaß- in den Auslaß strömt. Daher ist im Bereich des Einlasses 11 eine Leitrippe 22 angebracht, die den zwischen Umlenkkante 13 und Prallfläche 16 befindlichen Spalt abdeckt.

Figur 5 zeigt den Schnitt C - C der Anordnung gemäß Figur 4.

### Bezugszeichenliste

- 10: Pralltopf
- 11: Einlaß
- 12: Auslaß
- 13: Umlenkkante
- 14: Nietverbindung
- 15: O-Ring
- 16: Prallfläche
- 17: Ablauf
- 18: Auslaßventil
- 19: Aufnahmebohrung
- 20: Luftfiltergehäuse
- 21: Ansaugstutzen
- 22: Leitrippe

## Patentansprüche

1. Vorrichtung zur Abscheidung von Flüssigkeiten, insbesondere Wasser, aus Gasen, insbesodere der Entwässerung der Ansaugluft für eine Brennkraftmaschine, wobei diese sich in einer Gasleitung befindet, wobei die Gasleitung einen Einlaß (11) für das zu entwässernde Gas, einen Auslaß (12) für das entwässerte Gas und einen Ablauf (17) für das abgeschiedene Wasser besitzt und wobei die Gasleitung mindestens zwei Rohrteile aufweist, **dadurch gekennzeichnet**, daß die Vorrichtung in die Verbindung zweier Rohrteile integriert ist.

2. Vorrichtung nach Anspruch 1, **dadurch gekennzeichnet**, daß die Gasleitung der Ansaugtrakt einer Brennkraftmaschine vor einem Luftfilter ist.

3. Vorrichtung nach einem der vorherigen Ansprüche, **dadurch gekennzeichnet**, daß diese eine Prallfläche (16) und eine Umlenkkante (13) aufweist, zwischen denen sich ein Spalt befindet.

4. Vorrichtung nach einem der vorherigen Ansprüche, **dadurch gekennzeichnet**, daß eines der Rohrteile ein Ansaugstutzen (21) eines Luftfiltergehäuses ist.

5. Vorrichtung nach einem der vorherigen Ansprüche, **dadurch gekennzeichnet**, daß deren Ablauf mit einem Auslaßventil (18) versehen ist.

6. Vorrichtung nach einem der vorherigen Ansprüche, **dadurch gekennzeichnet**, daß das eine Rohrteil an dessen Ende einen Pralltopf (10) aufweist, in den das andere Rohrende hineinragt, wobei dieses die Umlenkkante, und der Topfboden die Prallfläche ist.

7. Vorrichtung nach Anspruch 6, **dadurch gekennzeichnet**, daß ein Teil des Rohrendes mit einer Leitrippe (22) im Kontakt ist.
